# EUROPEAN PATENT APPLICATION

(11) **EP 1 790 866 A1**
(43) Date of publication of application: **30.05.2007**
(21) Application number: 05772780.2
(22) Date of filing: 18.08.2005
(51) Int. Cl.: F16C 33/41, F16C 33/44

(54) **RETAINER FOR BEARING**

(30) Priority: 18.08.2004 JP 2004238722; 13.10.2004 JP 2004299246
(71) Applicant: JTEKT CORPORATION, Chuo-ku Osaka-shi Osaka 542-8502 (JP)
(72) Inventor: NAGAI, Setsuo c/o JTEKT Corporation, Osaka-shi Osaka 5428502 (JP); HIGASHIDA, Kazuki c/o JTEKT Corporation, Osaka-shi Osaka 5428502 (JP); TSUDA, Takeshi c/o JTEKT Corporation, Osaka-shi Osaka 5428502 (JP); YAMAMOTO, Akira c/o JTEKT Corporation, Osaka-shi Osaka 5428502 (JP)
(74) Representative: Steil, Christian
(86) International application number: PCT/JP2005/015081
(87) International publication number: WO 2006/019142

(57) **Abstract**

A bearing retainer, which is molded with a resin composition comprising a polyphenylene sulfide and a second resin having a higher deflection temperature under a load at 1.8 MPa than polyphenylene sulfide. The bearing retainer exhibits high heat resistance, chemical resistance, oil resistance, strength at a high temperature, and the like, being comparable to those of a conventional bearing retainer made of polyether ether ketone and further exhibits higher accuracy in dimension and shape and can be produced at a lower cost, as compared to a bearing retainer made of polyether ether ketone. It is preferred that the above second resin is a resin having a flexural modulus higher than that of polyphenylene sulfide and that a resin composition contains carbon fiber as a reinforcing fiber.

## Description

### FIELD OF THE INVENTION

The present invention relates to a bearing retainer for retaining a rolling element of rolling bearings.

### BACKGROUND ART

Polyether ether ketone (PEEK) have high-level heat resistance, chemical resistance, oil resistance (resistance to lubricating oils or greases), high temperature strength, creep strength, etc., in crystalline thermoplastic resins. Therefore, for example, utilizing such properties thereof there has been examined manufacturing a resin-made bearing retainer that can be used for rolling bearings for alternators exposed to a higher velocity revolution (not less than 15,000 rpm) at elevated temperatures of not less than 180 °C, using the PEEK.

For example, Patent document 1 describes producing an injection-moldable resin composition and injection-molding the resin composition to manufacture a bearing retainer, by dispersing, in PEEK, a powder of a heat resistant resin that has heat-resisting property higher than thermoplastic resins, but has difficulty in injection molding such as polybenzimidazole, utilizing the above-mentioned excellent properties of PEEK and characteristics enabling the PEEK to be injection-molded as a thermoplastic resin. According to the construction, bearing retainers having high heat-resisting properties almost equivalent to a bearing retainer that has been manufactured with heat resistant resins and processed only by cutting technique until now can be manufactured by injection molding, leading to drastic decrease of manufacturing costs of bearing retainers.
Patent document 1: WO-A1-9901676

### DISCLOSURE OF THE INVENTION

### PROBLEM TO BE SOLVED BY THE INVENTION

However, since PEEK has a large molding shrinkage, especially bearing retainers having a shape of wide opening at one side, such as crown type retainers, after injection molding PEEK may easily give variation of dimension in a side of the opening after mold releasing, and as a result, may give deformation to a shape in the side of opening, leading to a problem of low precision in predetermined dimensions and shapes of the bearing retainer. In addition, PEEK also has a problem of extraordinarily expensive price as thermoplastic resins. Therefore, there have been demanded resin-made bearing retainers that may exhibit high heat resistance, chemical resistance, oil resistance, high temperature strength, creep strength, etc. almost equivalent to bearing retainers made of PEEK, and at the same time that have higher precision in dimension and shape as compared with bearing retainers made of PEEK, and furthermore that allows production at lower costs.

The present invention relates to a bearing retainer molded with a resin composition comprising polyphenylene sulfide and a second resin, wherein the second resin has a higher deflection temperature under load at 1.8 MPa than the polyphenylene sulfide.
As the second resin, resins having a higher flexural modulus than the polyphenylene sulfide are preferable. In addition, as the second resin, at least one kind of resin selected from a group consisting of polyamideimide, aromatic polyimide, polyetherimide, polyether sulfone, polysulfone, and polyether ether ketone are preferable.

The bearing retainer of the present invention preferably includes the second resin at a proportion of 10 to 100 parts by weight with respect to polyphenylene sulfide of 100 parts by weight. In addition, the bearing retainer of the present invention preferably includes a carbon fiber as a reinforcing fiber.

### EFFECT OF THE INVENTION

In the present invention, a bearing retainer is molded with a resin composition including polyphenylene sulfide (PPS) that is inexpensive than PEEK, moreover has high heat resistance, chemical resistance, and oil resistance almost equivalent to those of the PEEK, and in addition is injection-moldable; and a second resin that can compensate unsatisfactory high temperature strength in case of independent use of PPS as compared with that of the PEEK because the second resin has a deflection temperature under load higher than that of the PPS. Furthermore, the above-described resin composition has a smaller molding shrinkage as compared with that of PEEK. Therefore, according to the present invention, a bearing retainer having high heat-resistance, chemical resistance, oil resistance, high temperature strength, etc. almost equivalent to those of conventional bearing retainers made of PEEK, and having higher precision in dimension and shape may be produced at lower costs as compared with the bearing retainers made of PEEK.

In addition, use of resins having a flexural modulus higher than that of PPS as the second resin can also give to a bearing retainer a high creep strength almost equivalent to that of bearing retainers made of PEEK. Since, in use of at least one kind of resin selected from a group consisting of polyamideimide, aromatic polyimide, polyetherimide, polyether sulfone, polysulfone, and polyether ether ketone as the second resin satisfying such properties, the resin may thoroughly be dissolved with PPS or a uniform sea-island structure may be formed, there may further be improved the above-described effects of compensating a high temperature strength of PPS by the second resin, and of giving a higher creep strength to the bearing retainer.

When the bearing retainer of the present invention includes the second resin at a proportion of 10 to 100 parts by weight with respect to polyphenylene sulfide of 100 parts by weight, heat-resistance, chemical resistance and oil resistance by PPS, and high temperature strength, etc by the second resin can all be maintained within an excellent range. In addition, when the bearing retainer of the present invention includes a carbon fiber as a reinforcing fiber, high temperature strength and creep strength of the bearing retainer may further be improved, and reduction in friction coefficient of the bearing retainer may be realized, also allowing decrease in abrasion loss.

### BRIEF DESCRIPTION OF THE DRAWINGS

Figure 1 is a perspective view illustrating appearance of retainers for ball bearing manufactured in Examples and Comparative example of the present invention.
Figure 2 is a sectional view of a test equipment used in order to subject the retainers for ball bearing of the Examples and Comparative example to a rotation test.
Figure 3 shows a graph illustrating amounts of dimensional change after rotation test of the retainers for ball bearing of Examples 1 and 2 and Comparative example 1.
Figure 4 shows a graph illustrating amounts of dimensional change after rotation test of the retainers for ball bearing of Examples 1 to 4 and Comparative example 1.
Figure 5 is a perspective view illustrating a condition that a metal ball is placed on the retainers for ball bearing of Examples in order to subject the retainers for ball bearings to static creep test.
Figure 6 shows a graph illustrating amounts of dimensional change after static creep test in the retainers for ball bearing of Examples 1 and 3.

### EMBODIMENT OF THE INVENTION

A bearing retainer of the present invention is molded with a resin composition comprising PPS and a second resin has a higher deflection temperature under load than PPS by injection molding etc. As the above described PPS, used may be any of PPS of conventionally known various grades allowing injection mold having a repeating unit represented by a formula (1), that is, for example, what is called cross-linked type PPS higher polymerized by partial cross-linking with heat in the presence of air after synthesis of a lower polymerized polymer by polymerization; and what is called linear type PPS that obtain a higher polymer in polymerization. Especially, the linear type PPS are preferred.

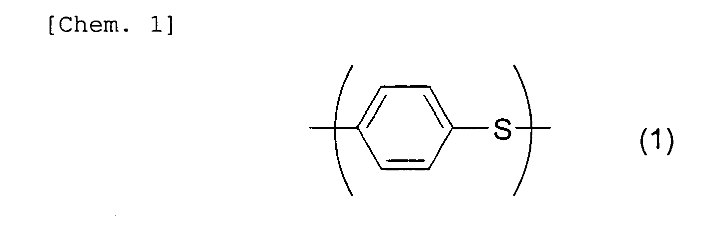

In addition, the linear type PPS preferably has a number average molecular weight Mn as large as possible, especially preferably a number average molecular weight Mn of not less than 8000, in consideration of providing the bearing retainer with a higher heat-resisting property, a higher temperature strength, and a higher creep strength.

However, an excessive large molecular weight reduces flowability of a resin composition in melting with heat, and may have possibility of disabling sufficient charging of the resin composition into all of corners in a mold cavity corresponding to a shape of a metal mold for the bearing retainer in injection molding. Therefore, the number average molecular weight Mn of the linear type PPS is especially preferably within a range of not more than 20000, and further preferably in a range of 8500 to 12000.

It is necessary for the second resin to have a deflection temperature under load higher than a deflection temperature under load of PPS to be combined, in order to improve a high temperature strength of the bearing retainer. The reason is that blending of resins having a deflection temperature under load equal to or lower than that of the PPS cannot improve the high temperature strength etc. of the bearing retainer.
The deflection temperature under load of the second resin may just be higher than the deflection temperature under load of PPS to be combined. However, in consideration of further improvement of the high temperature strength of the bearing retainer, the deflection temperature under load of the second resin is preferably not less than 20 °C higher than the deflection temperature under load of the PPS, and especially preferably not less than 30 °C higher. An upper limit of the deflection temperature under load of the second resin is not especially limited. The reason is that the higher deflection temperature under load of the second resin is, the more improvement of the high temperature strength of the bearing retainer is realized.

In addition, it is preferable for the second resin to satisfy the above described condition for a deflection temperature under load, and simultaneously to have a flexural modulus higher than that of the PPS, thereby allowing excellent creep strength for the bearing retainer. A flexural modulus of the second resin may just be higher than a flexural modulus of of the PPS to be combined. However, in consideration of much more improvement in creep strength of the bearing retainer, the flexural modulus of the second resin is preferably not less than 500 MPa higher than the flexural modulus of the PPS, and more preferaly not less than 1000 MPa higher. An upper limit of the flexural modulus of the second resin is not especially limited. The reason is that the higher flexural modulus of the second resin is, the more improvement of the creep strength of the bearing retainer is realized.

In the present invention, deflection temperatures under load of PPS and the second resin are represented with a deflection temperature under load at a bending stress of 1.8 MPa on a flatwise specimen, specified in ISO 75-1: 1993 "Plastics -- Determination of temperature of deflection under load -- Part 1: General test method", and ISO 75-2:1993 " PlasticsDetermination of temperature of deflection under load -- Part 2: Plastics and ebonite", and a flexural modulus is represented with a flexural modulus specified in ISO 178:1993 "PlasticsDetermination of flexural properties".

Furthermore, in the present invention, both of the deflection temperatures under load and the creep strengths of PPS and the second resin will be represented with a deflection temperature under load and a creep strength of the resin alone without inclusion of reinforcing fibers, fillers, etc. to be blended. The deflection temperature under load and the flexural modulus of the PPS vary based on a type of PPS, or on a difference of a molecular weight even within the same kind of PPS, and on a difference in a rate of cross linking in a cross linked type PPS. And therefore, the second resin having a deflection temperature under load and a flexural modulus that satisfy the above-described conditions may be selected based on an innate deflection temperature under load and a flexural modulus of PPS to be combined.

In addition, as the second resin preferable is a resin thoroughly dissolved with PPS, or a resin forming a uniform sea-island structure. Such second resins include, for example, one or more kinds of polyamideimide (PAI), aromatic polyimide (PI), polyetherimide (PEI), polyether sulfone (PES), polysulfone (PSU), polyether ether ketone (PEEK), etc. A resin or resins that satisfy the above-described conditions of the deflection temperature under load and the flexural modulus are selected for use.

The blending proportion of PPS and the second resin is not especially limited, and it is preferable to blend the second resin at a proportion of 10 to 100 parts by weight with respect to 100 parts by weight of PPS. The blending proportion of the second resin of less than 10 parts by weight may probably not provide sufficient improvement effect of the high temperature strength or the creep strength of the bearing retainer obtained by blending of the second resin. Furthermore, the blending proportion exceeding 100 parts by weight reduces relatively a proportion of PPS, which may reduce effect of maintaining high heat-resistance, chemical resistance, oil resistance, high temperature strength, creep strength, etc. equivalent to those of bearing retainers made of PEEK by combination use of the PPS with the second resin, and effect of cost reduction of the bearing retainers.

In addition, flowability of the resin composition in melting by heating may also possibly reduce, which may have possibility of disabling sufficient charging of the resin composition into all of corners in a mold cavity corresponding to a shape of a metal mold for the bearing retainer in injection molding. In combination use of two or more kinds of the second resins, a total amount is preferably within the above-described range of the blending proportion.
Various kinds of additives of reinforcing fibers, fillers, and the like may be blended with the resin composition. The reinforcing fibers include, for example, one or more kinds of glass fibers, carbon fibers, fibrous wollastonite, silicon carbide fibers, boron fibers, alumina fibers, Si-Ti-C-O fibers, metal fibers (copper, steel, stainless steel, etc.), aromatic polyamide (aramid) fibers, potassium titanate whisker, graphite whisker, silicon carbide whisker, silicon nitride whisker, and alumina whisker.

In addition, the fillers include, for example, one or more kinds of powder of heat resistant resins, such as phenol resin, silicone resin, fluororesin, polyamideimide resin, polyimide resin, and aromatic polyamide resin, and powder of inorganic substances, such as graphite, alumina, silica, silicon carbide, silicon nitride, carbon black, molybdenum disulfide, talc, diatomaceous earth, asbestos, magnesium carbonate, calcium carbonate, glass bead, and silica balloon.

Either the reinforcing fibers or the fillers may be blended with the resin composition, or both may be blended. The blending proportion, that is, a blending proportion of the single component in case of blending of either the reinforcing fibers or the fillers, or a blending proportion of a sum thereof in case of combination use of both of them, is preferably 10 to 50 parts by weight in 100 parts by weight of a total amount of PPS, the second resin, the reinforcing fibers and/or the fillers.

The blending proportion of the reinforcing fibers and/or the fillers of less than the above-described range may possibly not exhibit sufficient effect of adding these components, that is, effect of reinforcing bearing retainers. A blending proportion exceeding the above range may possibly reduce flowability of the resin composition in melting by heating, and may have possibility of disabling sufficient charging of the resin composition into all of corners in a mold cavity corresponding to a shape of a metal mold for the bearing retainer in injection molding.

In the present invention, especially carbon fibers are preferably blended as reinforcing fibers. The carbon fibers have a smaller specific gravity as compared with glass fibers which is the most general reinforcing fiber, and therefore, allow a larger amount of blending than the glass fibers in terms of a volume proportion, in blending at a fixed weight proportion with respect to total amount of PPS and the second resin. Therefore, the carbon fiber makes relatively smaller a volume proportion of resins that causes strength reduction and creep generation at elevated temperatures, leading to improvement in a high temperature strength and a creep strength of bearing retainers.

In addition, it is also possible to make the carbon fiber exist in a denser condition on a surface of bearing retainers as compared with a case of glass fibers. In addition, a friction coefficient of the carbon fibers is smaller than that of glass fibers. Therefore, the function of the carbon fibers having a smaller friction coefficient that exist in a denser condition on the surface of the bearing retainer may reduce a friction coefficient of the surface, and simultaneously decrease abrasion loss.

Preferably used are carbon fibers having a diameter of not less than 3 µm, which is the minimum diameter of commercially available carbon fibers at present, and not more than 15 µm. The diameter of the carbon fibers more than 15 µm may possibly reduce toughness of the bearing retainers, and may cause crack and breakage in case of press fitting of rolling elements into pockets of the bearing retainer, for example. The diameter of the carbon fibers is more preferably in a range of 6 to 10 µm, in consideration of further improvement in effects of prevention of the toughness deterioration of the bearing retainer, of improvement in a high temperature strength and a creep strength of the bearing retainer by blending of the carbon fibers as reinforcing fibers, and of decrease of surface friction coefficient and abrasion loss.

The blending proportion of the carbon fibers is preferably 10 to 50 parts by weight in 100 parts by weight of a total amount of PPS, the second resin, and the carbon fibers, and more preferably 20 to 40 parts by weight. The blending proportion of the carbon fiber of less than the above-described range may possibly not exhibit sufficient effects of improvement in a high temperature strength and a creep strength of the bearing retainer by blending of the carbon fiber as reinforcing fibers, and of decrease of friction coefficient of a surface thereof and abrasion loss.

In addition, the blending proportion exceeding the above range may reduce the toughness of the bearing retainer, and may possibly cause crack and breakage in case of press fitting of rolling elements into pockets of the bearing retainer, for example. It may also reduce flowability of the resin composition in melting by heating, and may have possibility of disabling sufficient charging of the resin composition into all of corners in a mold cavity corresponding to a shape of a metal mold for the bearing retainer in injection molding.

The bearing retainer of the present invention is manufactured by obtaining a form usable as a molding material, such as pellet and powder, by melting and kneading of each of the components, and then by molding with injection molding etc. as in conventional methods. A structure of the present invention is applicable to bearing retainers having any shapes for various rolling bearings, such as ball bearings, needle roller bearings, cylindrical roller bearings, cone roller bearings, etc.
The bearing retainers of the present invention thus obtained have high heat-resistance, chemical resistance, oil resistance, high temperature strength, etc. almost equivalent to those of conventional bearing retainers made of PEEK. They can be used, for example, for rolling bearings for alternators used under conditions of high velocity revolution (not less than 15,000 rpm) at elevated temperatures of not less than 180 °C. Furthermore, since a resin composition including PPS and the second resin has a smaller molding shrinkage as compared with PEEK, the bearing retainer of the present invention may provide better prevention of variation of dimension on an opening side after injection molding and following mold release and of subsequent deformation of the shape on the opening side, especially in bearing retainers having a shape with an opening side like a crown shape retainer, as compared with bearing retainers made of PEEK, leading to improvement in precision of dimensions and shapes. Furthermore, since PPS is inexpensive than PEEK and injection moldable, the bearing retainer of the present invention allows production at lower costs as compared with bearing retainers made of PEEK.

### EXAMPLE

### <Examination of a second resin>

A linear type PPS having a number average molecular weight of Mn = 8700 was used as a PPS, and second resins to be combined with the PPS were examined. As the second resins, six kinds of resins shown as samples 1 to 6 were used.
Sample 1: PAI resin
Sample 2: PI resin
Sample 3: PEI resin
Sample 4: PES resin
Sample 5: PSU resin
Sample 6: PEEK resin
Each of the sample resins, PPS, and a composite material obtained by blending of 30 parts by weight of a glass fiber to 70 parts by weight of PPS were measured for a flatwise deflection temperature under load according to the above-mentioned ISO 75-1 and 2, and for a flexural modulus according to ISO 178. Table 1 shows results.

**Table 1**

| | Deflection temperature under load (°C) | Flexural modulus (MPa) |
|---|---|---|
| PPS | 110 | 3200 |
| PAI | 278 | 4900 |
| PI | more than 360 | 3090 |
| PEI | 200 | 3300 |
| PES | 203 | 2550 |
| PSU | 175 | 2690 |
| PEEK | 140 | 3620 |
| PPS + glass fiber | 255 | 85000 |

Table 1 shows that each resin sample has a deflection temperature under load higher than that of PPS, and therefore, that blending of either of the resins as the second resin to PPS may improve high temperature strength of bearing retainers. Table 1 also shows that the PAI resin of sample 1, the PEI resin of sample 3, and the PEEK resin of sample 6 have a flexural modulus higher than that of PPS, and therefore, that blending of either of the resins as the second resin to PPS can also improve a creep strength of bearing retainers.

### <Examination of molding shrinkage>

A linear type PPS having a number average molecular weight of Mn = 8700 was used as a PPS, the PPS and the PAI resin of sample 1 were blended at a weight proportion of 70/30, and then 30% by weight of a carbon fiber was blended to the resulting resin to obtain a resin composition. Using this resin composition, a specimen 1 with a length of 127 mm, a width of 12.7 mm, and a thickness of 3.2 mm for molding shrinkage measurement was molded by injection molding. For a comparison, a specimen 2 having the same dimensions was molded by injection molding using a resin composition obtained by blending of 30% by weight of a glass fiber to the PEEK resin of sample 6. As a metal mold for injection molding, used was a metal mold, having a gate in a center of an end face in a longitudinal direction, in which a flow direction of the resin composition intorduced from the gate identical to the longitudinal direction of the specimen.

The specimens 1 and 2 were measured for a molding shrinkage in the flow direction of the resin composition, and a perpendicular molding shrinkage identical to a thickness direction of the specimen,according to a measuring method described in ASTM D955-00. Table 2 shows results.

**[Table 2]**

| | Resin | Molding shrinkage (%) | |
|---|---|---|---|
| | | Flow direction | Perpendicular direction |
| Specimen 1 | PPS+PAI | 0.20 | 0.40 |
| Specimen 2 | PEEK | 0.23 | 1.06 |

The Table shows that the resin composition obtained by combination use of PPS and the second resin can especially greatly reduce the perpendicular molding shrinkage of the specimens as compared with PEEK, and can improve precision of dimensions and a shape of bearing retainers.

### <Examples 1, 2>

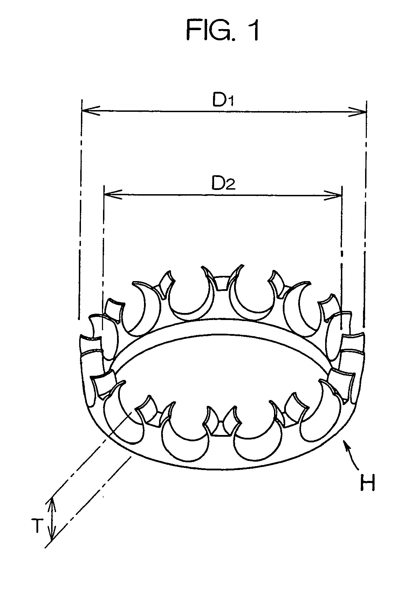

Based on preceding results, the above-described linear type PPS [deflection temperature under load: 110 °C; flexural modulus: 3200 MPa; number average molecular weight: Mn = 8700], and the PAI resin of sample 1 as the second resin [deflection temperature under load: 278 °C; flexural modulus: 4900 MPa] were blended together at a proportion of weight of 70 : 30 (Example 1), and at a proportion of weight of 62.5 : 37.5 (Example 2). Then a glass fiber of 30 parts by weight was added to 70 parts by weight of a resulting compound obtained from the both resins, melted and kneaded to obtain a resin composition. Using the resulting resin composition, a retainer H for ball bearings having a shape shown in Figure 1, and having a pocket side outer diameter D₁ of 40 mm, an inner diameter D₂ of 30 mm, and a height T of 10 mm, by injection molding.

### Comparative example 1

Using the same linear type PPS as used in Examples 1 and 2, a glass fiber of 30 parts by weight was added to the PPS of 70 parts by weight, melted and kneaded to obtain a resin composition. Using the resulting resin composition, obtained was a retainer H having the same shape and the same dimensions.

### Rotation test:

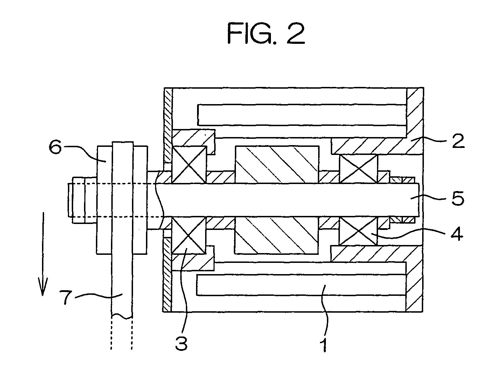

The retainers H for ball bearing manufactured in Examples 1 and 2 and Comparative example 1 were built into rolling bearings. They were assembled in a test equipment shown in Figure 2 in a state having a fluorine grease (a grease obtained by blending polytetrafluoroethylene powder as a thickener with perfluoroalkyl polyether as a base oil) filled therein.

The test equipment shown in the Figure comprises a fixed side housing 2 having an cartridge heater 1 therein; a rolling bearing 3 to be tested that is built in a front side of the fixed side housing 2; a rotary shaft 5 freely rotatably supported by a bearing 4 assembled in rear side; a pulley 6 fixed to a front end side of the rotary shaft 5; and a poly V-Belt 7 extended between the pulley 6 and a driving shaft of a motor (not illustrated).

The rolling bearing 3 to be examined was built into a front-side of the test equipment. A tension of the poly V-Belt 7 was adjusted, and the motor was operated in a condition where a load was applied to the pulley 6, as shown by an arrow of continuous line in the Figure. The rotary shaft 5 was rotated at a rotating speed of 18,000 rpm, and at the same time energization to a cartridge heater 1 was started by a temperature regulating circuit, not shown, so that a temperature of an outer ring of the rolling bearing 3 to be measured using a thermocouple, not shown, give 200 °C.

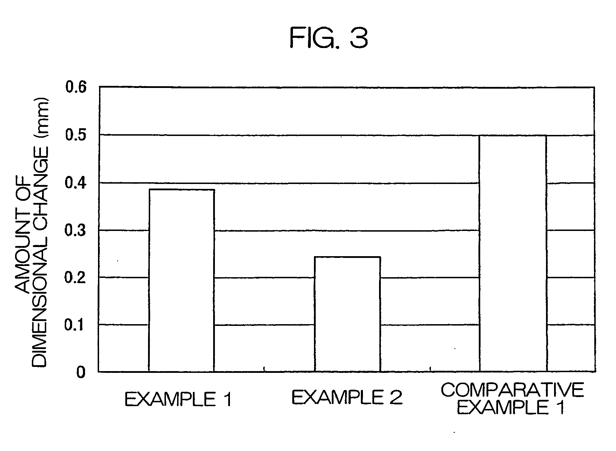

After continuous rotation of 1000 hours after a moment that a temperature of the outer ring reached 200 °C, the retainer H for ball bearing was removed from the rolling bearing 3, and an amount of dimensional changes of the pocket side outer diameter D₁ (mm) was measured for. Figure 3 shows results.
Figure 3 shows that the retainers for ball bearing of Examples 1 and 2, in which the second resin was blended with PPS, reduced the amount of dimensional changes by approximately 1/5 to 1/2 as compared with Comparative example 1, and therefore, Figure 3 confirmed that the retainers for ball bearing of Examples 1 and 2 could improve a high temperature strength and a creep strength.

### Examples 3 and 4

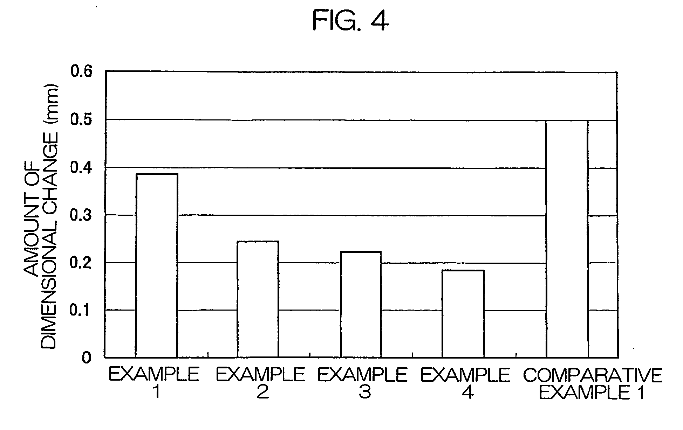

The linear type PPS identical with PPS used in Examples 1 and 2, and PAI resin of the sample 1 as the second resin were blended at a proportion of weight of 70 : 30 in Example 3, and at a proportion of weight of 62.5 : 37.5 in Example 4. A carbon fiber (6 µm in diameter) of 30 parts by weight was added into the compounds of both resins of 70 parts by weight, and they were melted and kneaded to produce a resin composition. Retainers H for ball bearing having the same shapes and the same dimensions were manufactured by injection molding using the resin compositions. The same rotation test was performed using the retainers H for ball bearing manufactured in the Examples 3 and 4. Figure 4 shows results with the results of Examples 1 and 2 and Comparative example 1.

### Static creep test

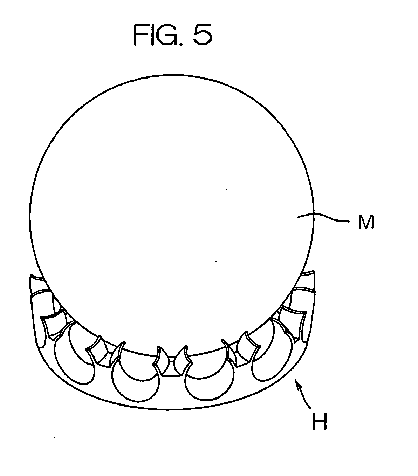

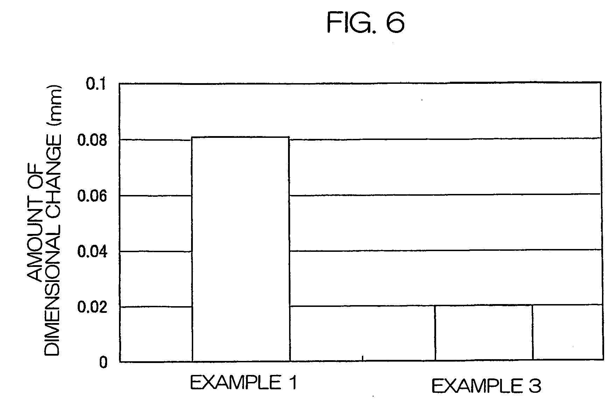

The retainers H for ball bearing manufactured in Examples 1 and 3 were placed on a level substrate, so that a pocket side faced upward, as shown in Figure 5. In a condition that a metal ball M with 40 mm in diameter and a weight of about 260 g was placed on each of the retainer H, each retainer H for ball bearing was kept standing for 160 hours in a thermostat bath set at 200 °C. Then, each retainer H for ball bearing was removed and measured for an amount of dimensional changes of the pocket side inner diameter D₂ (mm). Figure 6 shows results.

Figures 4 and 6 confirmed that the retainer for ball bearing of Example 3 using the carbon fiber as reinforcing fibers could more reduce amounts of dimensional changes in the rotation test and the static creep test than those of Example 1 using the glass fiber, and could improve a high temperature strength and a creep strength.

## Claims

1. A bearing retainer molded with a resin composition comprising a polyphenylene sulfide and a second resin, wherein the second resin has a higher deflection temperature under load at 1.8 MPa than the polyphenylene sulfide.

2. The bearing retainer according to Claim 1, wherein the second resin has a higher flexural modulus than the polyphenylene sulfide.

3. The bearing retainer according to Claim 1, wherein the second resin is at least one kind of resin selected from a group consisting of polyamideimide, aromatic polyimide, polyetherimide, polyether sulfone, polysulfone, and polyether ether ketone.

4. The bearing retainer according to Claim 1, comprising the second resin at a proportion of 10 to 100 parts by weight with respect to 100 parts by weight of the polyphenylene sulfide.

5. The bearing retainer according to Claim 1, comprising a carbon fiber as a reinforcing fiber.
